# EUROPEAN PATENT APPLICATION

(11) **EP 4 607 256 A1**
(43) Date of publication of application: **27.08.2025**
(21) Application number: 23884230.6
(22) Date of filing: 28.06.2023
(51) Int. Cl.: G02B 6/36, G02B 6/38

(54) **OPTICAL CONNECTOR, FIBER-OPTIC PIGTAIL, FIBER-OPTIC PATCH CORD, OPTICAL COMMUNICATION APPARATUS AND SYSTEM**

(30) Priority: 04.11.2022 CN 202211376938
(71) Applicant: Huawei Technologies Co., Ltd., Shenzhen, Guangdong 518129 (CN)
(72) Inventor: SHI, Xiting, Shenzhen, Guangdong 518129 (CN); ZHAO, Junying, Shenzhen, Guangdong 518129 (CN); CHEN, Chong, Shenzhen, Guangdong 518129 (CN); WU, Jinhua, Shenzhen, Guangdong 518129 (CN); LI, Xinbai, Shenzhen, Guangdong 518129 (CN)
(74) Representative: Gill Jennings & Every LLP
(86) International application number: PCT/CN2023/103275
(87) International publication number: WO 2024/093291

(57) **Abstract**

Embodiments of this application disclose an optical connector, an optical pigtail, an optical patch cord, and an optical communication device and system, and relate to the field of optical communication technologies, to resolve a problem that an optical module has a large size and occupies large layout space on a mainboard in the current technology. The optical connector includes an optical waveguide device with a first optical port and a fastening structure. The optical waveguide device is able to implement splitting, combining, demultiplexing, multiplexing, multi core-single core conversion, filtering, reflection, spot size conversion, optical path connection/disconnection, optical path direction conversion, or optical power adjustment. The fastening structure is configured to fasten an optical transmission medium. The first optical port is aligned with and connected to the optical transmission medium in the fastening structure. In this application, the optical connector combines functions such as splitting, combining, demultiplexing, multiplexing, multi core-single core conversion, filtering, reflection, spot size conversion, optical path connection/disconnection, optical path direction conversion, or optical power adjustment with a connector function without changing a size of an existing connector, to reduce a size of an optical module and reduce a board area occupied by the optical module.

## Description

This application claims priority to Chinese Patent Application No. 202211376938.4, filed with the China National Intellectual Property Administration on November 4, 2022 and entitled "OPTICAL CONNECTOR, OPTICAL PIGTAIL, OPTICAL PATCH CORD, AND OPTICAL COMMUNICATION DEVICE AND SYSTEM", which is incorporated herein by reference in its entirety.

### TECHNICAL FIELD

This application relates to the field of optical communication technologies, and in particular, to an optical connector, an optical pigtail, an optical patch cord, and an optical communication device and system.

### BACKGROUND

In application scenarios such as a switch, an artificial intelligence (artificial intelligence, AI) cluster, and a high-performance computing (high-performance computing, HPC) cluster, to meet development requirements of large capacity, low power consumption, low costs, and a low latency of a system, optical fiber transmission evolves from a traditional mode of a pluggable optical module on a panel to new modes such as on board optics (on board optics, OBO), near package optics (near package optics, NPO), and co-package optics (co-package optics, CPO). In addition, a capacity of optical fiber transmission is also increasing. A transmission rate of a fiber single wavelength needs to be increased, for example, from 100 Gbps to 200 Gbps. In addition, a quantity of optical transmission channels needs to be increased. For example, a quantity of optical fibers or fiber cores for transmission is increased through space division multiplexing (Space Division Multiplexing, SDM), or a quantity of optical wavelengths for transmission is increased through wavelength division multiplexing (wavelength division multiplexing, WDM), to increase the quantity of optical transmission channels.

However, in some existing optical modules that use a space division multiplexing technology and a multi-core optical fiber, an optical connector connected to the optical fiber needs to be disposed, and an intermediate independent converter needs to be disposed between the multi-core optical fiber and a single-core optical fiber. Because the intermediate independent converter needs to be protected by an independent packaging structure, and has a large size, a size of the optical module is large. This causes a problem that large space is occupied on a mainboard of the optical module. In addition, in some existing optical modules that use the wavelength division multiplexing technology, an intermediate independent multiplexer-demultiplexer or an intermediate independent multiplexer and an intermediate independent demultiplexer need to be disposed between optical fiber cables on a mainboard. The multiplexer-demultiplexer or the multiplexer and the demultiplexer occupy large space in the optical module. In addition, the multiplexer-demultiplexer or the multiplexer and the demultiplexer need to be connected to the optical fiber through fusion splicing or an additional connector. Therefore, large space needs to be reserved on the mainboard.

### SUMMARY

Embodiments of this application provide an optical connector, an optical pigtail, an optical patch cord, and an optical communication device and system, to resolve a problem that an optical module has a large size and occupies large layout space in a mainboard in the current technology.

To achieve the foregoing objective, this application uses the following technical solutions.

According to a first aspect, an embodiment of this application provides an optical connector. The optical connector includes an optical waveguide device and a fastening structure. The optical waveguide device is able to implement functions of splitting, combining, demultiplexing, multiplexing, multi core-single core conversion, filtering, reflection, spot size conversion, optical path connection/disconnection, optical path direction conversion, or optical power adjustment. Therefore, the optical waveguide device may be any one of a splitter, a combiner, a multiplexer, a demultiplexer, a multi core-single core converter, a grating, a spot size converter, a deflector, a tunable optical attenuator, an optical switch, or an electrically tunable optical splitter. The optical waveguide device has a first optical port and a second optical port. One of the first optical port and the second optical port is an optical signal input port of the optical waveguide device, and the other of the first optical port and the second optical port is an optical signal output port of the optical waveguide device. The fastening structure is configured to fasten an optical transmission medium. For example, the optical transmission medium may be an optical fiber or a flexible optical waveguide. The fastening structure may be disposed on the optical waveguide device, or may be connected to the optical waveguide device. After the optical transmission medium is fastened by the fastening structure, the first optical port of the optical waveguide device may be aligned with and connected to the optical transmission medium in the fastening structure. Therefore, an optical signal in the optical transmission medium can be transmitted to the optical waveguide device, or the optical waveguide device can transmit an optical signal to the optical transmission medium.

Compared with an existing optical module, when the optical connector in this embodiment of this application is applied to an optical module, because the optical connector may have a function such as demultiplexing, multiplexing, or multi core-single core conversion in this embodiment of this application, no independent multi core-single core converter, multiplexer, or demultiplexer needs to be disposed between optical fiber cables regardless of whether the optical module uses a space division multiplexing technology or a wavelength division multiplexing technology. The optical waveguide device in the optical connector in this embodiment of this application may combine a function of the multi core-single core converter, the multiplexer, or the demultiplexer with a function of an existing optical connector, to improve an integration level of the optical connector without increasing a size of the optical connector. Therefore, there is no need to reserve space on a mainboard for the independent multi core-single core converter, multiplexer, or demultiplexer. Therefore, a size of the optical module is reduced, a board area occupied by the optical module is reduced, and an integration level of the optical module is improved. In addition, the fastening structure in this embodiment of this application can facilitate alignment and connection between the first optical port of the optical waveguide device and the optical transmission medium.

In some embodiments, the optical waveguide device in this embodiment of this application may be of a single-layer structure, or may be of a multi-layer structure, to meet different optical signal transmission requirements. In addition, a manufacturing material of the optical waveguide device includes any one or more of glass, silicon dioxide, lithium niobate, a group III-V semiconductor compound, silicon-on-insulator, silicon oxynitride, and a high polymer.

It should be noted that an angle value range of an included angle between a light incidence direction of the optical waveguide device and a light emission direction of the optical waveguide device is 0 to 180°. In some embodiments, the light incidence direction of the optical waveguide device may be the same as the light emission direction of the optical waveguide device, to adapt to an optical transmission application scenario in which a transmission angle remains unchanged. The light incidence direction of the optical waveguide device may also be perpendicular to the light emission direction of the optical waveguide device, to adapt to an optical transmission application scenario in which a transmission angle changes by 90°.

In some embodiments, the fastening structure includes two clamping plates that are disposed opposite to each other. The two clamping plates are configured to: clamp the optical transmission medium and expose an end face of the optical transmission medium. The two clamping plates are fastened to the optical waveguide device, for example, connected by using an adhesive material, so that the optical transmission medium in the clamping plates is aligned with and fastened to the first optical port of the optical waveguide device. The fastening structure is simple.

In addition, a contact surface of either or both of the clamping plates is provided with a first positioning groove, and the first positioning groove may be configured to position the optical transmission medium. There may be one or more first positioning grooves. The first positioning groove can further ensure that the optical transmission medium can be aligned with the first optical port of the optical waveguide device.

In some embodiments, the fastening structure is a second positioning groove provided on the optical waveguide device. The second positioning groove may be aligned with the first optical port of the optical waveguide device. The optical transmission medium is positioned by the second positioning groove, so that the optical transmission medium can be aligned with and connected to the first optical port of the optical waveguide device (for example, alignment and connection of end faces), and the fastening structure is also simple.

In some embodiments, the fastening structure is a fastening block. A plurality of fastening holes provided in the fastening block, and the optical transmission medium may be fastened in the fastening holes. In this way, requirements for fastening a plurality of rows of optical transmission media and alignment and connection between the optical transmission media and the first optical port of the optical waveguide device can be met.

In some embodiments of this application, the optical connector further includes a ferrule, and the ferrule is provided with a mounting groove. The optical waveguide device is mounted in the mounting groove. In addition, the second optical port of the optical waveguide device is exposed outside the ferrule. The ferrule may form mechanical protection for an outer wall of the optical waveguide device.

In addition, in some embodiments, the optical waveguide device is in interference fit with the mounting groove, to fasten the optical waveguide device in the ferrule. In some other embodiments, the optical waveguide device is connected to the mounting groove by using an adhesive material, to fasten the optical waveguide device in the ferrule. The foregoing two connection manners are simple.

In addition, in some embodiments, the optical connector further includes a positioning structure. The positioning structure may be disposed on the ferrule, or may be disposed on the optical waveguide device. The positioning structure is configured to connect to another optical connector (referred to as a second optical connector below) for positioning, so that an optical transmission medium in the second optical connector is aligned with and connected to the second optical port of the optical connector (referred to as a first optical connector below) in this application. A structure of the second optical connector may be similar to or different from a structure of the first optical connector. In addition, the positioning structure of the first optical connector in this embodiment of this application also has a plurality of structures, to cooperate with a structure of the second optical connector for positioning. In some examples, the positioning structure in the first optical connector is a positioning pin. The positioning pin may be movably mounted on the ferrule, or may be movably mounted on the optical waveguide device. Correspondingly, the second optical connector is provided with a positioning hole that matches the positioning pin. The positioning pin is connected to the positioning hole, to implement connection between the first optical connector and the second optical connector for positioning.

In some other examples, the positioning structure on the first optical connector is exchanged with the positioning structure on the second optical connector. That is, the positioning structure on the first optical connector is a positioning hole. The positioning hole may be provided on the ferrule, or may be provided on the optical waveguide device. Correspondingly, the second optical connector is provided with a positioning pin that matches the positioning hole. The positioning pin is connected to the positioning hole, to implement connection between the first optical connector and the second optical connector for positioning.

The optical waveguide device is a tunable optical attenuator, an optical switch, or an electrically tunable optical splitter, and the optical waveguide device includes a substrate, an optical waveguide, and an electronic control component. The optical waveguide may be disposed in the substrate, or may be disposed on the substrate. The electronic control component is disposed on the substrate. The electronic control component may be configured to heat the optical waveguide or apply a voltage to the optical waveguide. Specifically, the electronic control component may include an electrode, a conductive line, and a connection pad that are all disposed on the substrate. The electrode, the conductive circuit, and the connection pad are connected sequentially. The electrodes may be disposed above or on both sides of the optical waveguide. Therefore, the electrode may heat the optical waveguide in the optical waveguide device or apply a voltage to the optical waveguide, to further integrate functions in the optical connector.

In some embodiments, the optical waveguide device further includes an optical protective film, and the optical protective film is disposed on a surface on which the second optical port of the optical waveguide device is located. When the first optical connector is connected to the second optical connector, the optical protective film may form mechanical protection for the optical waveguide device, and may further form optical protection. For example, the optical protective film may include any one or more of a heat-resistant film, a heat-conducting film, a heat-insulation film, and an anti-reflection film. Therefore, the optical protective film may have functions such as heat resistant, a heat conduction, heat insulation, and an anti-reflection film.

According to a second aspect, an embodiment of this application provides an optical pigtail. The optical pigtail includes an optical transmission medium and the optical connector in the foregoing embodiment. The optical transmission medium may be an optical fiber, or may be a flexible optical waveguide. For example, if the optical transmission medium is an optical fiber, the optical pigtail may be a fiber pigtail. One end of the optical transmission medium may be fastened by the fastening structure in the optical connector, and the optical transmission medium in the fastening structure may be aligned with and connected to the first optical port of the optical waveguide device. Because the optical connector in the optical pigtail in this embodiment of this application has a same structure as the optical connector in the foregoing embodiment, the two can resolve a same technical problem and achieve same technical effects. Details are not described herein again.

According to a third aspect, an embodiment of this application provides an optical patch cord. The optical patch cord includes an optical transmission medium, a first optical connector, and a second optical connector. The optical transmission medium may be an optical fiber, or may be a flexible optical waveguide. For example, if the optical transmission medium is an optical fiber, the optical patch cord may be an optical fiber patch cord. The first optical connector and the second optical connector are respectively connected to two ends of the optical transmission medium. Either or both of the first optical connector and the second optical connector are the optical connector in the foregoing embodiment. In addition, the first optical connector is the optical connector in the foregoing embodiment, and the first optical connector fastens the optical transmission medium, and connects the optical transmission medium to and aligns the optical transmission medium with the first optical port of the optical waveguide device by using the fastening structure. Similarly, because the first optical connector and/or the second optical connector in the optical patch cord in this embodiment of this application have/has the same structure as the optical connector in the foregoing embodiment, the two can resolve a same technical problem and achieve same technical effects. Details are not described herein again.

According to a fourth aspect, an embodiment of this application provides an optical communication device. The optical communication device includes an optical chip and the optical connector in the foregoing embodiment. The optical chip is connected to the optical connector. By disposing the foregoing optical connector, a size of the optical communication device can also be reduced.

According to a fifth aspect, an embodiment of this application provides an optical communication system. The optical communication system includes at least two optical communication devices and the optical connector in the foregoing embodiment. Any two optical communication devices may be connected through the optical connector. Because the optical connector in the optical communication system in this embodiment of this application has a same structure as the optical connector in the foregoing embodiment, the two can resolve a same technical problem and achieve same technical effects. Details are not described herein again.

### BRIEF DESCRIPTION OF DRAWINGS

To describe the technical solutions in embodiments of this application, the following describes the accompanying drawings used in embodiments of this application.
FIG. 1 is a diagram of modules of an optical communication system according to an embodiment of this application;
FIG. 2 is a diagram of a structure of a part of components in an optical communication device according to an embodiment of this application;
FIG. 3 is a diagram of a structure of a part of components in an optical communication device according to a related technology 1;
FIG. 4 is a diagram of a structure of a part of components in an optical communication device according to a related technology 2;
FIG. 5 is a diagram of a structure of a connection between a first optical connector and an optical fiber according to an embodiment of this application;
FIG. 6 is a diagram of a structure of a first optical connector with a ferrule according to an embodiment of this application;
FIG. 7 is a diagram of a structure of a first type of ferrule in a first optical connector according to an embodiment of this application;
FIG. 8 is a diagram of a structure of a second type of ferrule in a first optical connector according to an embodiment of this application;
FIG. 9 is a diagram of a structure of an L-shaped optical waveguide device with a curved chamfer in a first optical connector according to an embodiment of this application;
FIG. 10 is a diagram of a structure of an L-shaped optical waveguide device with a flat chamfer in a first optical connector according to an embodiment of this application;
FIG. 11 is a diagram of a structure with two optical waveguide devices and one mirror reflector in a first optical connector according to an embodiment of this application;
FIG. 12 is a diagram of a structure of an optical waveguide device with a plurality of layers of waveguide paths in a first optical connector according to an embodiment of this application;
FIG. 13 is an exploded diagram of a fastening structure with two clamping plates in a first optical connector according to an embodiment of this application;
FIG. 14 a diagram of a structure in which a fastening structure in a first optical connector clamps a plurality of optical fibers according to an embodiment of this application;
FIG. 15 is a cross-sectional diagram of a connection between a first optical connector and an optical fiber according to an embodiment of this application;
FIG. 16 is a cross-sectional diagram of a fastening structure that is a second positioning groove in a first optical connector according to an embodiment of this application;
FIG. 17 is a diagram 1 of a structure in which a fastening structure in a first optical connector is a fastening block according to an embodiment of this application;
FIG. 18 is a diagram 2 of a structure in which a fastening structure in a first optical connector is a fastening block according to an embodiment of this application;
FIG. 19 is a diagram of a structure in which a positioning pin is disposed on a ferrule in a first optical connector according to an embodiment of this application;
FIG. 20 is a diagram of a structure of a connection between a positioning pin in a first optical connector and a positioning hole in a second optical connector with an optical waveguide device according to an embodiment of this application;
FIG. 21 is a diagram of a structure of a connection between a positioning pin in a first optical connector and a positioning hole in a second optical connector on which an optical fiber is fastened according to an embodiment of this application;
FIG. 22 is a diagram of a structure in which a ferrule in a first optical connector has a mounting hole according to an embodiment of this application;
FIG. 23 is a diagram of a structure in which a positioning pin is disposed on an optical waveguide device in a first optical connector according to an embodiment of this application;
FIG. 24 is a diagram of a structure in which a ferrule in a first optical connector has a positioning hole according to an embodiment of this application;
FIG. 25 is a diagram of a structure in which an optical waveguide device in a first optical connector is provided with a positioning hole according to an embodiment of this application;
FIG. 26 is a diagram of a structure of a connection between a positioning hole in a first optical connector and a positioning pin in a second optical connector according to an embodiment of this application;
FIG. 27 is a diagram of a structure of a connection between a first optical connector with an optical protective film and a second optical connector according to an embodiment of this application;
FIG. 28 is a diagram of a structure of a first optical connector with an electronic control component according to an embodiment of this application;
FIG. 29 is a diagram of a structure of an optical fiber patch cord according to an embodiment of this application; and
FIG. 30 is a diagram of a structure of a fiber pigtail according to an embodiment of this application.

Reference numerals:
1000, 1000A, 1000B: optical communication device; 100: circuit board component; 10: mainboard; 20: switch chip; 30: optical module; 1: optical chip; 2: fiber array unit; 21: optical fiber; 211: first end; 212: second end; 3: optical connector, first optical connector; 30a: first optical port; 30b: second optical port; 31: ferrule; 311: mounting groove; 312, 303: mounting hole; 32: optical waveguide device; 32a: first optical waveguide device; 32b: second optical waveguide device; 321: substrate; 322: waveguide path; 323: electronic control component; 3231: electrode; 3232: conductive line; 3233: connection pad; 3234: flexible printed circuit board; 33: fastening structure; 331a: clamping plate; 3311: first positioning groove; 332: adhesive material; 333: jacket; 331b: second positioning groove; 331c: fastening block; 3310: fastening hole; 34: positioning structure; 341a, 302: positioning pin; 341b, 301: positioning hole; 04a: converter; 04b: multiplexer-demultiplexer; 35: mirror reflector; 36: optical protective film; 40: transfer board; 200: fastening panel; 300: second optical connector; 300a: optical fiber; 2000: optical fiber patch cord; 2001: optical fiber; 3000: fiber pigtail; 3001: optical fiber.

### DESCRIPTION OF EMBODIMENTS

To make the objectives, technical solutions, and advantages of this application clearer, the following further describes this application in detail with reference to the accompanying drawings.

The terms "first" and "second" mentioned below are merely intended for a purpose of description, and shall not be understood as an indication or implication of relative importance or implicit indication of the quantity of indicated technical features. Therefore, a feature limited by "first", "second", or the like may explicitly or implicitly include one or more features. In the descriptions of this application, unless otherwise stated, "a plurality of" means two or more than two.

In addition, in this application, orientation terms such as "up", "down", "left", "right", "horizontal", and "vertical" are defined relative to an orientation in which components are schematically placed in the accompanying drawings. It should be understood that, these directional terms are relative concepts that are used for relative description and clarification, and may vary accordingly based on changes of the orientation in which the components are placed in the accompanying drawings.

In this application, unless otherwise specified and limited, the term "connection" should be understood in a broad sense. For example, the term "connection" may refer to a connection of a mechanical structure or a connection of a physical structure. For example, the connection may be a fixed connection, or may be a detachable connection, or may be an integrated connection, or may be a direct connection, or may be an indirect connection through an intermediate medium. The connection may alternatively be understood that components are in physical contact and electrically conductive, or may be understood that different components in a line structure are connected through a physical line that can transmit an electrical signal, such as a PCB copper foil or a conductor.

It should be noted that, in a description process of embodiments of this application, "top", "upper", "above", "bottom", "lower", and "below" are all referenced according to a direction of a position of a component in the drawings.

An embodiment of this application includes an optical communication system. The optical communication system may be a data communication optical network system, a computer network optical system, an optical distribution network (optical distribution network, ODN) system, an optical cross-connect system, or an optical backplane system. This is not limited in this application. The optical communication system includes two or more optical communication devices and a plurality of optical fiber cables. In the optical communication network, two adjacent optical communication devices are connected through an optical fiber cable. The optical communication device may be specifically a switch, an optical module, an optical fiber distribution box, or the like. The optical fiber cable may be an optical patch cord, or may be an optical pigtail. It should be noted that the optical patch cord includes an optical transmission medium and two optical connectors. The two optical connectors are respectively connected to two ends of the optical transmission medium. Structures of the two optical connectors may be the same, or may be different. This is not limited in this application. The optical pigtail includes an optical transmission medium and one optical connector. The optical connector is mounted on one end of the optical transmission medium. The optical transmission medium may be an optical fiber, or may be a flexible optical waveguide. Specifically, a manufacturing material of the flexible optical waveguide may be a polymer. If the optical transmission medium is an optical fiber, the optical patch cord is an optical fiber patch cord, and the optical pigtail is a fiber pigtail.

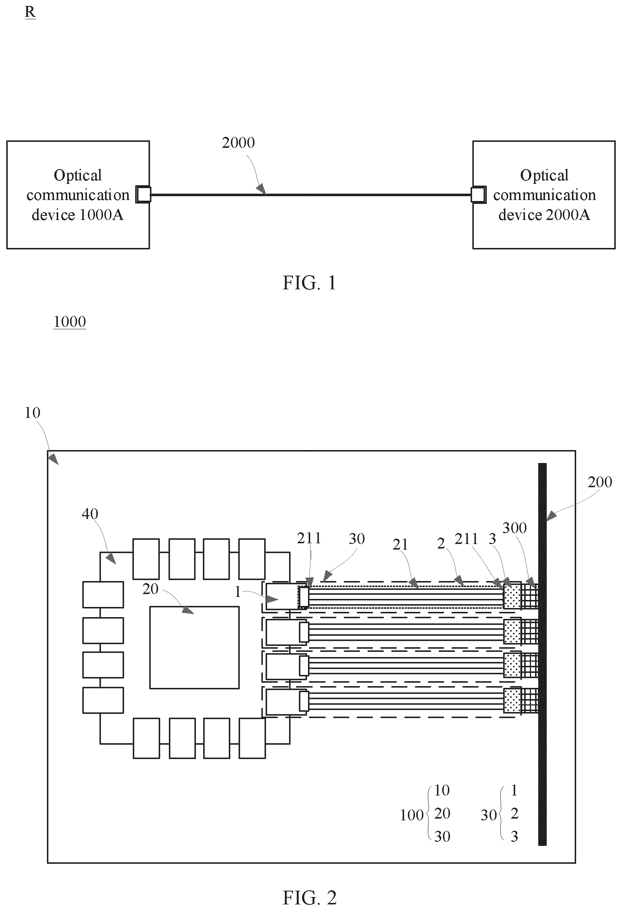

FIG. 1 shows a specific optical communication system according to an embodiment of this application. For example, refer to FIG. 1. An optical communication system R in this embodiment of this application includes two optical communication devices 1000A and 1000B and an optical fiber patch cord 2000. The two optical communication devices 1000A and 1000B are connected through the optical fiber patch cord 2000. For example, the optical communication device 1000 is a switch, and the switch includes a housing and a circuit board component disposed in the housing. Refer to FIG. 2. The circuit board component 100 includes a mainboard 10, and a switch chip 20 and an optical module 30 on the mainboard 10. The mainboard 10 may be specifically a printed circuit board. The switch chip 20 and the optical module 30 may be packaged in a CPO, NPO, or OBO manner. This is not limited in this application. In addition, in some embodiments, the circuit board component 100 may further include a transfer board 40. The transfer board 40 is disposed between the mainboard 10, and the switch chip 20 and the optical module 30, and may implement signal transmission between the mainboard 10, and the switch chip 20 and the optical module 30.

The optical module 30 may include an optical chip 1, a fiber array unit (fiber array unit, FAU) 2, and a first optical connector 3. Specifically, a transmission mode of an optical fiber 21 in the fiber array unit 2 includes but is not limited to an optical transmission mode such as single-mode, multi-mode, and few-mode. In addition, the optical fiber 21 may be a multi-core optical fiber, or may be a hollow optical fiber. This is not limited in this application. It may be understood that the optical fiber 21 in the fiber array unit 2 may also be replaced with a flexible optical waveguide. A transmission mode of the flexible optical waveguide includes but is not limited to an optical transmission mode as single-mode, multi-mode, and few-mode. The following mainly uses the optical fiber 21 in the fiber array unit 2 as an example for description.

A first end 211 of the optical fiber 21 in the fiber array unit 2 is connected to the optical chip 1, and a second end 212 of the optical fiber 21 in the fiber array unit 2 is connected to the first optical connector 3. It should be noted that a housing of the optical communication device 1000 may include a fastening panel 200, a second optical connector 300 is mounted on the fastening panel 200, and the first optical connector 3 may be connected to the second optical connector 300.

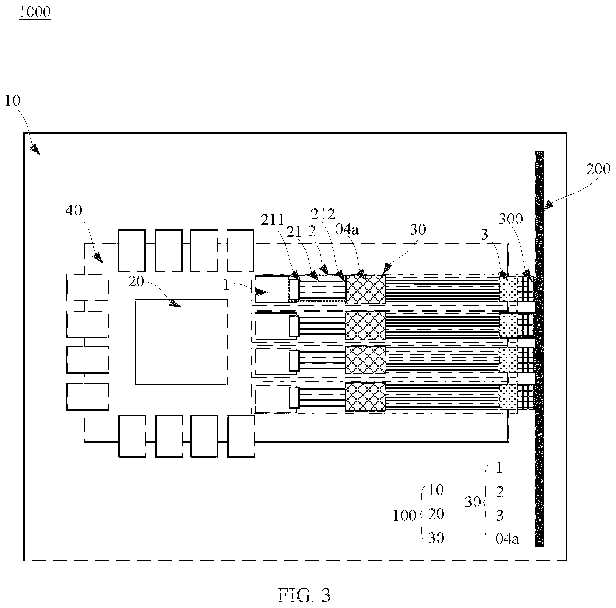

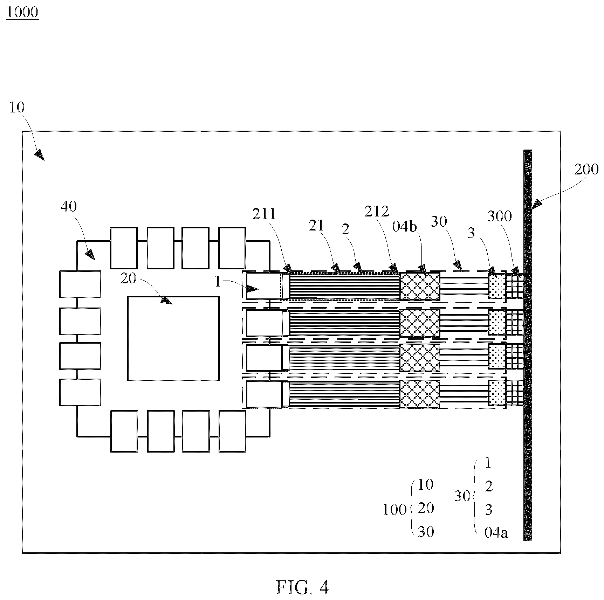

To meet a large-capacity requirement of optical fiber transmission, the optical module 30 may increase a quantity of optical transmission channels by using a space division multiplexing or wavelength division multiplexing technology. When the optical module 30 uses the space division multiplexing technology, as shown in FIG. 3, the second end 212 of the optical fiber 21 in the fiber array unit 2 needs to be connected to an independent converter 04a. The optical fiber 21 in the fiber array unit 2 may be a multi-core optical fiber, to save occupied space. Therefore, the converter is a multi core-to-single core converter (referred to as a "multi core-single core converter" for short below). The multi core-single core converter is connected to the first optical connector 3 through a single-core optical fiber cable. Addition of the multi core-single core converter causes the optical module 30 to occupy large board space on the mainboard 10. However, when the optical module 30 uses the wavelength division multiplexing technology, as shown in FIG. 4, the optical fiber 21 in the fiber array unit 2 needs to be connected to an independent multiplexer-demultiplexer 04b. The multiplexer-demultiplexer 04b is connected to the first optical connector 3 through another optical fiber cable. Similarly, addition of the multiplexer-demultiplexer 04b also causes the optical module 30 to occupy large board space on the mainboard 10.

For example, for a multi-channel optical module 30, a 64-channel optical module is used as an example, and the optical module may use four 16-channel multiplexing (mux) modules (including multiplexers) and four 16-channel demultiplexing (demux) modules (including demultiplexers). The multiplexing module is used as an example, and a size of one multiplexing module is 100 mm (length)x80 mm (width)x10 mm (height). Therefore, at least 320 cm2 space needs to be reserved on the mainboard 10 for the multiplexing modules. Alternatively, 16 four-channel multiplexing modules are used, and a size of one multiplexing module is 16.5 mm (length)x11 mm (width)x6.5 mm (height). Therefore, at least 29.04 cm2 space needs to be reserved on the mainboard 10. Both the foregoing two solutions cause a large size of the optical module 30.

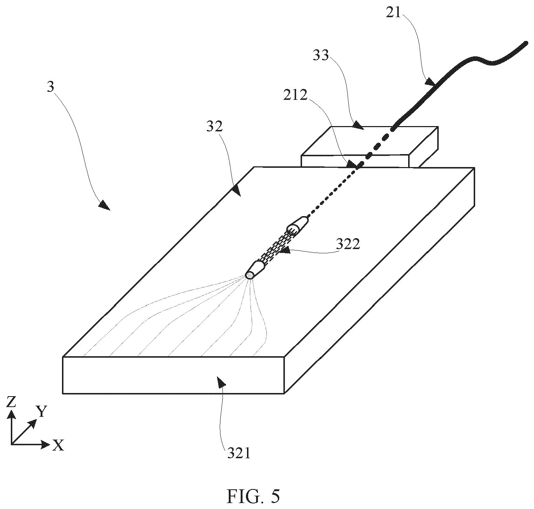

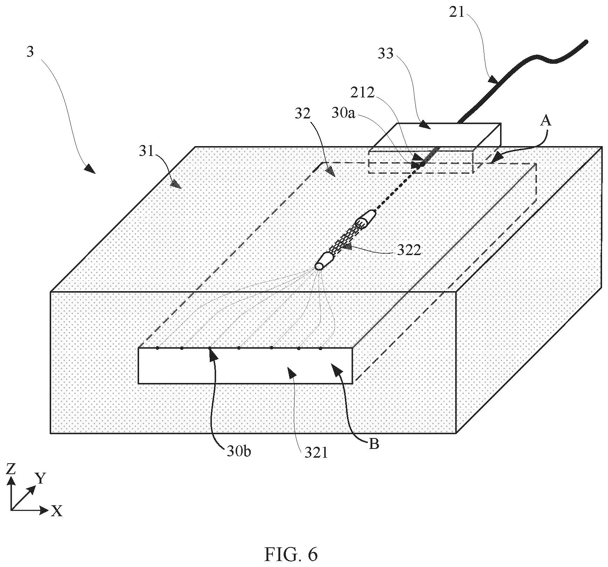

To resolve the foregoing problem, an embodiment of this application provides an optical connector of a new structure. The optical connector may have a connection function and functions such as conversion, multiplexing, or demultiplexing. For example, the first optical connector 3 has a new optical connector structure. Refer to FIG. 5. The first optical connector 3 includes an optical waveguide (planar lightwave circuit, PLC) device 32 and a fastening structure 33. Specifically, the optical waveguide device 32 is able to implement functions of splitting, combining, demultiplexing, multiplexing, multi core-single core conversion, filtering, reflection, spot size conversion, optical path connection/disconnection, optical path direction conversion, optical power adjustment, or the like. Therefore, the optical waveguide device 32 may be any one of a splitter, a combiner, a multiplexer, a demultiplexer, a multi core-single core converter, a grating, a spot size converter, a deflector, a tunable optical attenuator, an optical switch, or an electrically tunable optical splitter. Refer to FIG. 6. The optical waveguide has a first optical port 30a and a second optical port 30b. One of the first optical port 30a and the second optical port 30b is an optical signal input port of the optical waveguide device 32, and the other of the first optical port 30a and the second optical port 30b is an optical signal output port of the optical waveguide device 32. In addition, quantities of first optical ports 30a and second optical ports 30b vary as a function of the optical waveguide device 32 varies. There may be one or more first optical ports 30a and second optical ports 30b. This is not limited in this application.

For example, still refer to FIG. 5. The optical waveguide device 32 includes a substrate 321 and an optical waveguide disposed on the substrate 321. The optical waveguide may be manufactured by using a film layer structure. For example, the optical waveguide is directly disposed on the substrate 321 by using a chemical vapor deposition method (a low-pressure chemical vapor deposition method or a plasma-enhanced chemical vapor deposition method) or polymer thin film bonding. Then, a required waveguide structure is formed by using a photolithography process. Alternatively, the optical waveguide may be a waveguide structure that is directly written into the substrate 321 by femtosecond laser. In addition, in some examples, the optical waveguide may form one or more waveguide paths 322, and the first optical port 30a and the second optical port 30b are respectively located at two ends of the waveguide path 322. This is not limited in this application. An example in which the optical waveguide of the optical waveguide device 32 has a waveguide path 322 is used below for further description.

The fastening structure 33 may be configured to fasten the second end 212 of the optical fiber 21 in the fiber array unit 2. The fastening structure 33 may be directly disposed on the optical waveguide device 32, or may be connected to the optical waveguide device 32. In addition, after the second end 212 of the optical fiber 21 in the fiber array unit 2 is fastened by the fastening structure 33, the second end 212 of the optical fiber 21 in the fiber array unit 2 may be aligned with and coupled to the waveguide path 322 in the optical waveguide device 32. That is, the second end 212 of the optical fiber 21 in the fiber array unit 2 shown in FIG. 6 may be coupled to the first optical port 30a of the waveguide path 322 in the optical waveguide device 32. Specifically, the second end 212 of the optical fiber 21 may be end-face coupled to the first optical port 30a of the waveguide path 322 in the optical waveguide device 32. When the optical connector in this embodiment of this application is applied to the optical module 30, regardless of whether the optical module 30 uses the space division multiplexing technology or the wavelength division multiplexing technology, the independent converter 04a, or a multiplexer-demultiplexer 04b does not need to be disposed between optical fiber cables.

Therefore, compared with the optical module 30 shown in FIG. 3 or FIG. 4, the optical waveguide device 32 in the optical connector 3 in this embodiment of this application combines a function of the multi core-single core converter, the multiplexer, or the demultiplexer with a function of an existing optical connector, to improve an integration level of the optical connector 3 without increasing a size of the optical connector. Therefore, there is no need to reserve space on the mainboard 10 for the independent multi core-single core converter, multiplexer, or demultiplexer. Therefore, a size of the optical module 30 is reduced, a board area occupied by the optical module 30 is reduced, and an integration level of the optical module 30 is improved. In addition, the fastening structure 33 in this embodiment of this application may facilitate alignment and connection between the waveguide path 322 of the optical waveguide in the optical waveguide device 32 and the optical fiber 21.

It should be noted that a manufacturing material of the optical waveguide device 32 may be any one of glass, silicon dioxide SiO2, lithium niobate (LiNbO3), silicon oxynitride, silicon-on-insulator (Silicon-on-Insulator, SOI), a group III-V semiconductor compound, and a polymer (Polymer). This is not limited in this application. In addition, a transmission mode of the optical waveguide device 32 includes but is not limited to single-mode, multi-mode, few-mode, and the like. This is not limited in this application.

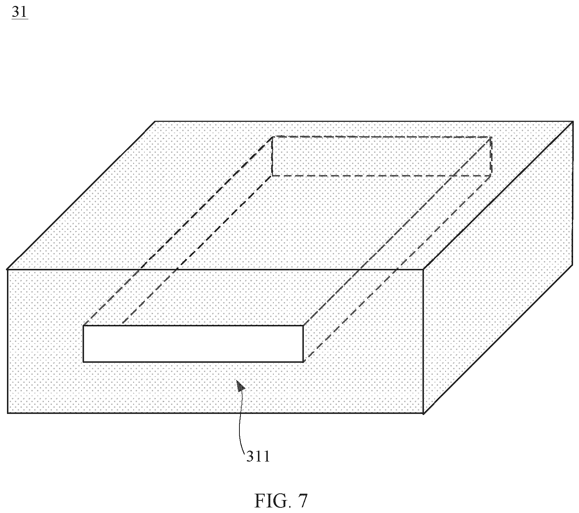

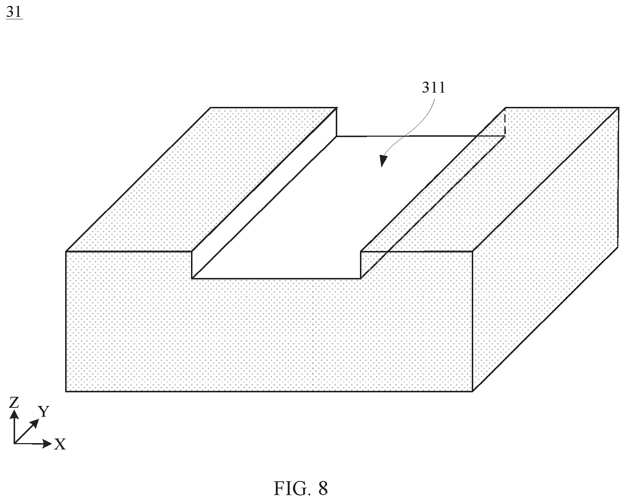

To further protect the optical waveguide device 32, in some embodiments of this application, the optical connector 3 further includes a ferrule 31 shown in FIG. 6. A mounting groove 311 shown in FIG. 7 is formed in the ferrule 31, and the optical waveguide device 32 may be fastened in the mounting groove 311. Therefore, the ferrule 31 may form mechanical protection for the optical waveguide device 32. For example, the ferrule 31 may be a hollow integrated structure, so that the mounting groove 311 is directly formed during manufacturing. The entire mounting groove 311 may be located inside the ferrule 31, as shown in FIG. 7. Alternatively, the mounting groove 311 is located on a side surface (for example, an upper surface) of the ferrule 31, as shown in FIG. 8. This is not limited in this application.

In addition, the optical waveguide device 32 may be fastened to the mounting groove 311 of the ferrule 31 in a plurality of manners. This is not limited in this application. For example, the optical waveguide device 32 is in interference fit with the mounting groove 311 of the ferrule 31. Therefore, the ferrule 31 may be made of a material with elasticity, so that the optical waveguide device 32 is conveniently assembled into the mounting groove 311 of the ferrule 31. Alternatively, the optical waveguide device 32 may be fastened to the mounting groove 311 of the ferrule 31 by using an adhesive material, and an assembly operation is also simple.

In addition, to meet transmission requirements of optical signals at different angles, in this embodiment of this application, an angle value range of an included angle between a light incidence direction of the optical waveguide device 32 and a light emission direction of the optical waveguide device 32 in the optical connector 3 is 0 to 180°. In some embodiments, the light incidence direction of the optical waveguide device 32 is the same as the light emission direction of the optical waveguide device 32. Therefore, this is applicable to an application scenario in which an optical signal transmission angle remains unchanged. In some other embodiments, the light incidence direction of the optical waveguide device 32 is perpendicular to the light emission direction of the optical waveguide device 32. Therefore, this is applicable to an application scenario in which an optical signal transmission angle changes by 90°. Alternatively, the optical connector 3 may further include another auxiliary optical prism. After being combined with the plurality of optical waveguide devices 32, the auxiliary optical prism is applicable to various application scenarios in which a transmission angle changes.

For example, the light incidence direction of the optical waveguide device 32 is the same as the light emission direction of the optical waveguide device 32 shown in FIG. 6. The optical waveguide device 32 is a cuboid. Correspondingly, the ferrule 31 is also a cuboid. A first end face A and a second end face B of the optical waveguide are respectively located on two opposite surfaces of the optical waveguide device 32. One of the first end face A and the second end face B is a light incidence face, and the other of the first end face A and the second end face B is a light emission face. The following uses an example in which the first end face A is the light incidence face and the second end face B is the light emission face for description. The first optical port 30a may be located on the first end face A, and the second optical port 30b may be located on the second end face B. An optical parameter such as a refractive index of the optical waveguide device is controlled by selecting a proper material of the optical waveguide and performing another operation, so that light enters the optical waveguide path 322 through the first optical port 30a on the first end face A, and then directly emits through the second optical port 30b on the second end face B without changing an angle.

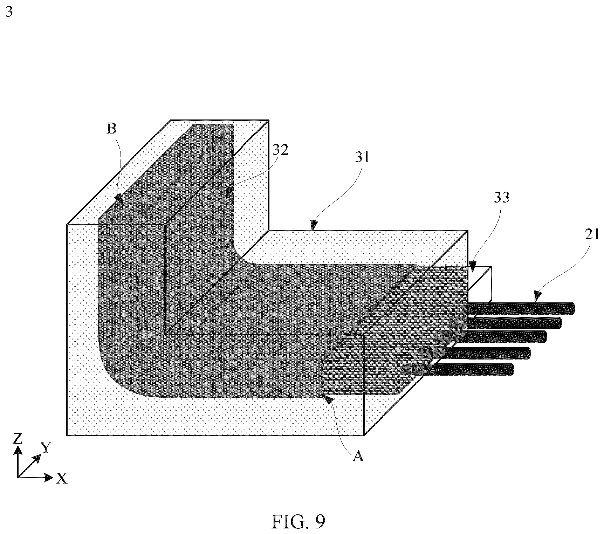

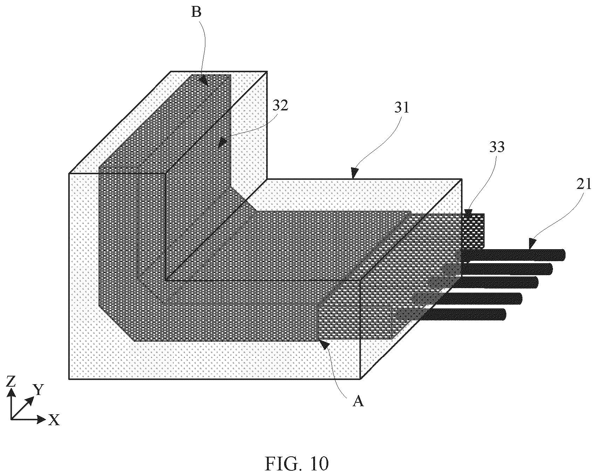

A light incidence direction of the optical waveguide device 32 is perpendicular to a light emission direction of the optical waveguide device 32 shown in FIG. 9. The optical waveguide device 32 is in an L shape. Correspondingly, the ferrule 31 may also be in an L shape. In addition, the ferrule 31 may include two L-shaped pinch plates that can be fastened to each other. The optical waveguide device 32 may be sandwiched between the two L-shaped pinch plates. The first optical port 30a and the second optical port 30b of the optical waveguide device 32 are respectively located on two mutually perpendicular outer end faces on the optical waveguide device 32. That is, the first end face A on which the first optical port 30a is located and the second end face B on which the second optical port 30b is located are perpendicular to each other. An optical parameter such as a refractive index of the optical waveguide device 32 is controlled by selecting a proper material of the optical waveguide and performing another operation, so that light may enter the optical waveguide through the first optical port 30a on the first end face A, be reflected by 90° in the optical waveguide, and then be exported through the second optical port 30b on the second end face B. Therefore, the L-shaped optical waveguide device 32 is applicable to an application scenario in which an optical signal transmission angle changes by 90°. In addition, a chamfer at a bending position of the L-shaped optical waveguide device 32 may be in a curved surface shape shown in FIG. 9, or may be in a flat surface shape shown in FIG. 10.

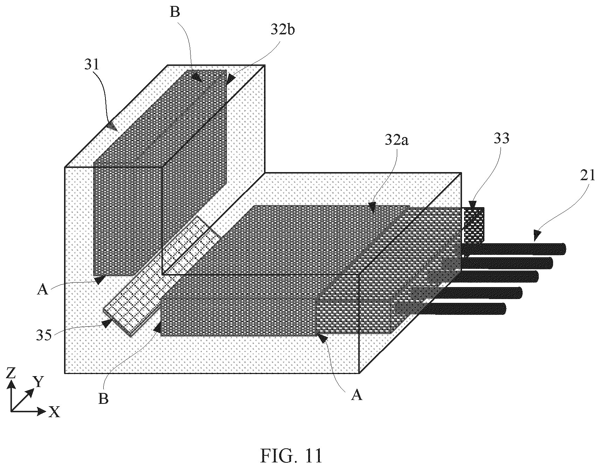

The optical connector 3 shown in FIG. 11 includes a first optical waveguide device 32a, a second optical waveguide device 32b, and a mirror reflector 35. The first optical waveguide device 32a and the second optical waveguide device 32b are spaced apart. A first end face A and a second end face B of the first optical waveguide device 32a are respectively located on two opposite surfaces of the first optical waveguide device 32a. A first end face and a second end face of the second optical waveguide device 32b are respectively located on two opposite surfaces of the second optical waveguide device 32b. In addition, a light emission direction of the first optical waveguide device 32a and a light emission direction of the second optical waveguide device 32b are perpendicular to each other. The mirror reflector 35 is disposed between the light emission direction of the first optical waveguide device 32a and the second optical waveguide device 32b. The mirror reflector 35 may reflect emission light of the first optical waveguide device 32a into the second optical waveguide device 32b. Optical parameters such as the light emission direction of the first optical waveguide device 32a and a refractive index of the second optical waveguide device 32b are controlled by selecting a proper material of the optical waveguide and performing another operation, so that light enters the first optical waveguide device 32a through the first optical port 30a on the first end face A of the first optical waveguide device 32a, and then is exported to the first optical waveguide device 32a through the second optical port 30b on the second end face B of the first optical waveguide device 32a. Then, the light is reflected by the mirror reflector 35 to the second optical waveguide device 32b. The light enters the second optical waveguide device 32b through the first optical port on the first end face (which is a light incidence face) of the second optical waveguide device 32b. Finally, the light is exported through the second optical port on the second end face (which is a light emission face) of the second optical waveguide device 32b. Correspondingly, the ferrule 31 may be in an L shape or a cuboid.

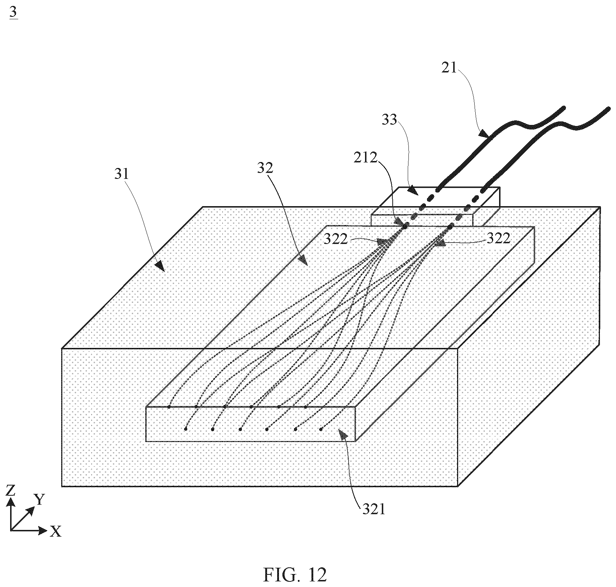

In addition, the optical waveguide device 32 may be of a single-layer structure shown in FIG. 6. That is, the plurality of waveguide paths 322 in the optical waveguide device 32 may be disposed at a same layer. For example, the plurality of waveguide paths 322 are all disposed on a surface of the substrate 321, or are separately formed at a same height position on the substrate 321. The optical waveguide device 32 may also be of a multi-layer structure shown in FIG. 12. For example, the plurality of waveguide paths 322 in the optical waveguide device 32 may be disposed on a surface of the substrate 321 in a stacked manner, or may be disposed at different height positions on the substrate 321 at intervals.

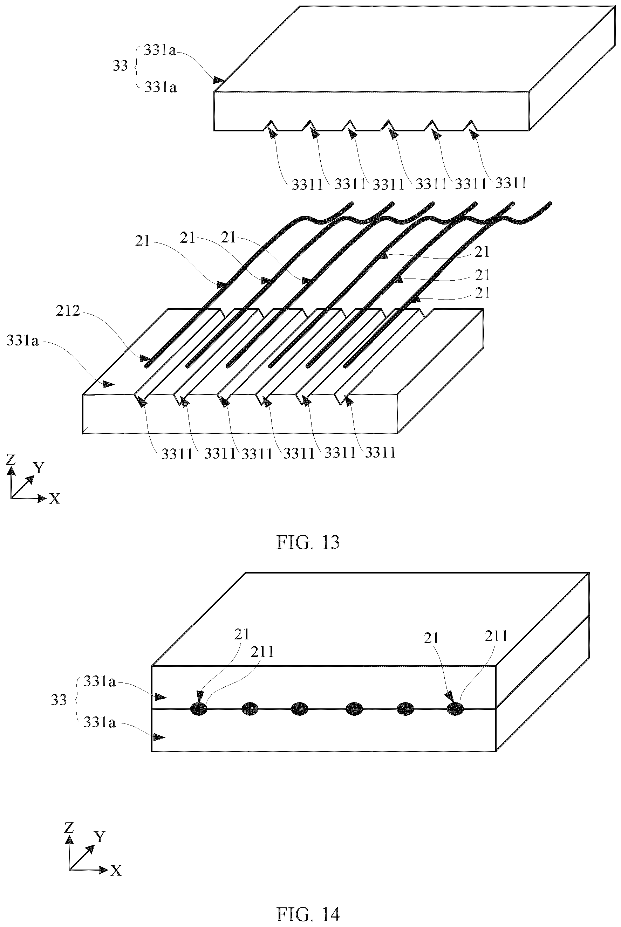

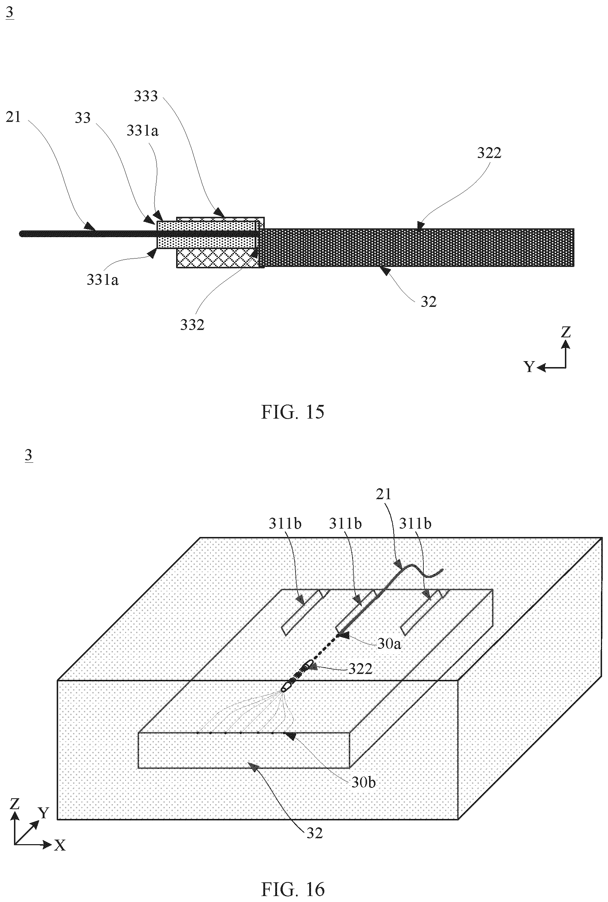

The foregoing mainly describes the optical waveguide device 32. In some embodiments, refer to FIG. 13. The fastening structure 33 includes two clamping plates 331a that are disposed opposite to each other. The clamping plate 331a may be specifically made of a transparent material such as glass, silicon, or plastic. As shown in FIG. 14, the two clamping plates 331a fasten and clamp a plurality of optical fibers 21, and all ends of second ends 212 of the plurality of optical fibers 21 may be exposed. As shown in FIG. 15, the two clamping plates 331a are connected to the optical waveguide device 32, so that the optical fiber 21 between the two clamping plates 331a is aligned with and connected to the waveguide path 322 in the optical waveguide device 32. Therefore, an accurate connection between the optical fiber 21 and the waveguide path 322 in the optical waveguide device 32 is implemented. Therefore, after the fastening structure 33 is connected to the plurality of optical fibers 21, it may also be considered that the fiber array unit 2 is formed.

In addition, in some embodiments, a contact surface of either or both of the clamping plates 331a is provided with a first positioning groove 3311 shown in FIG. 13, and the first positioning groove 3311 may position the optical fiber 21. The contact surface is a surface on which the two clamping plates 331a are in contact with each other. A quantity of first positioning grooves 3311 may be one, or may be two or more, and may be specifically determined based on a quantity of optical fibers 21 that need to be fastened. For example, the fastening structure 33 needs to position a plurality of optical fibers 21 in the fiber array unit 2. There are a plurality of first positioning grooves 3311 provided on either or both of the clamping plates 331a, and the plurality of first positioning grooves 3311 are aligned with and cooperate with the plurality of optical fibers 21 in the fiber array unit 2 in one-to-one correspondence. In addition, second ends 212 of the plurality of optical fibers 21 in the fiber array unit 2 may further be aligned and matched with first optical ports 30a of the plurality of waveguide paths 322 in the optical waveguide device 32 in one-to-one correspondence. It should be noted that the first positioning groove 3311 may be a U-shaped groove or a V-shaped groove. This is not limited in this application.

Based on the structural design of the fastening structure 33, the two clamping plates 331a and the optical waveguide device 32 may be fastened in a manner such as bonding. In addition, refer to FIG. 15. The two clamping plates 331a may be fastened to the optical waveguide device 32 by using an adhesive material 332. In other words, one end face of the two clamping plates 331a that is close to the second ends 212 of the plurality of optical fibers 21 is connected to the end face of the optical waveguide device 32 by using the adhesive material 332. A connection manner is simple. The adhesive material 332 may be a transparent material, to avoid affecting transmission of an optical signal.

In addition, in some embodiments, still refer to FIG. 15. A jacket 333 may be disposed at a joint between the two clamping plates 331a and the optical waveguide device 32. The jacket 333 may protect the joint between the two clamping plates 331a and the optical waveguide device 32, to prevent the joint between the two clamping plates 331a and the optical waveguide device 32 from breaking and failing.

In some other embodiments, the fastening structure 33 may alternatively be a second positioning groove 331b provided on the optical waveguide device 32, as shown in FIG. 16. The second positioning groove 331b may be aligned with and connected to the first optical port 30a of the waveguide path 322 in the optical waveguide device 32. The second positioning groove 331b may position the optical fiber 21. When the optical fiber 21 is mounted in the second positioning groove 331b, the optical fiber 21 may be aligned with and connected to the first optical port 30a of the waveguide path 322 in the optical waveguide device 32. In addition, after the optical fiber 21 is mounted in the second positioning groove 331b, the optical fiber 21 further needs to be fastened to the second positioning groove 331b, for example, by using an adhesive material. Similarly, a quantity of second positioning grooves 331b on the optical waveguide device 32 may be determined based on a quantity of optical fibers 21 that need to be fastened.

It should be noted that an alignment and connection operation between the optical fiber 21 in the fastening structure 33 and the first optical port 30a of the waveguide path 322 in the optical waveguide device 32 may be completed before the optical waveguide device 32 is mounted on the ferrule 31, or may be completed after the optical waveguide device 32 is mounted on the ferrule 31. This is not limited in this application. In addition, the second positioning groove 331b may be a U-shaped groove or a V-shaped groove. This is not limited in this application either.

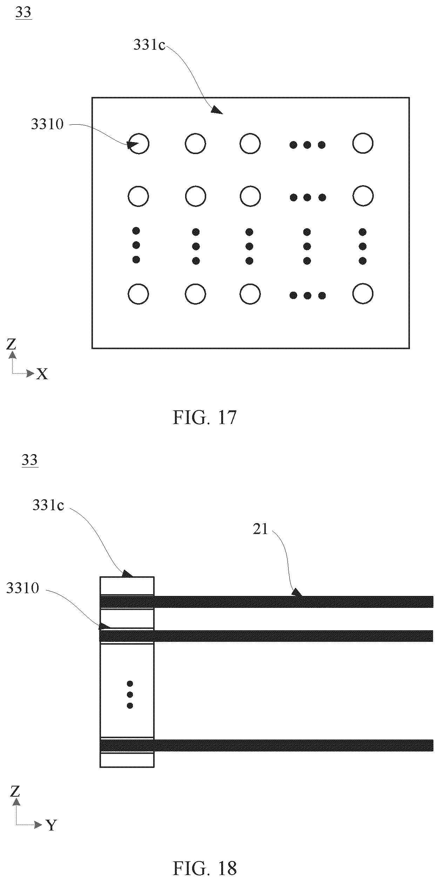

In addition, in the solutions of the fastening structure 33 shown in FIG. 14 and FIG. 16, only one row of optical fibers can be fastened. Refer to FIG. 17 and FIG. 18. In some embodiments of this application, the fastening structure 33 may further include an integrated fastening block 331c, and a plurality of fastening holes 3310 are provided in the fastening block 331c. The plurality of fastening holes 3310 are provided along a plurality of rows (in a Z-axis direction) and a plurality of columns (in an X-axis direction), to meet a requirement of fastening a plurality of rows of optical fibers 21. In addition, the fastening block 331c may be specifically made of a transparent material such as glass, silicon, or plastic.

It may be understood that, if the optical transmission medium that needs to be fastened by the fastening structure 33 is a flexible optical waveguide, there is one first positioning groove 3311 on the clamping plate 331a, and the first positioning groove 3311 is provided in a shape matching a shape of the flexible optical waveguide. The plurality of fastening holes 3310 in the fastening block 331c are arranged in the Z-axis direction, and are all set to a shape matching the flexible optical waveguide.

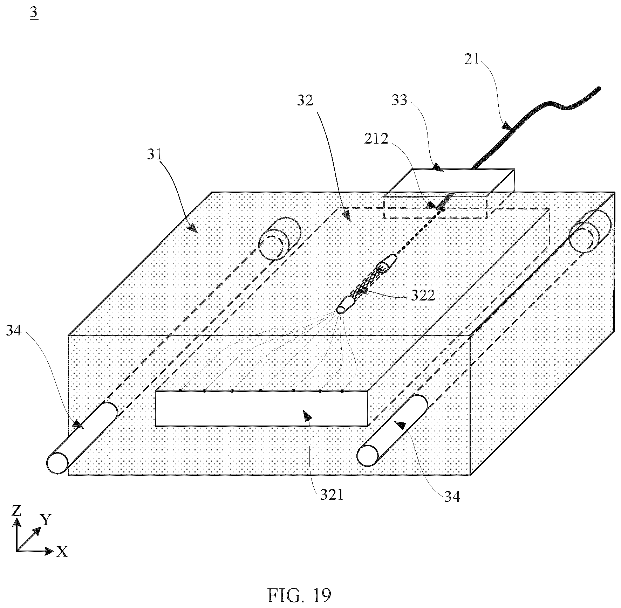

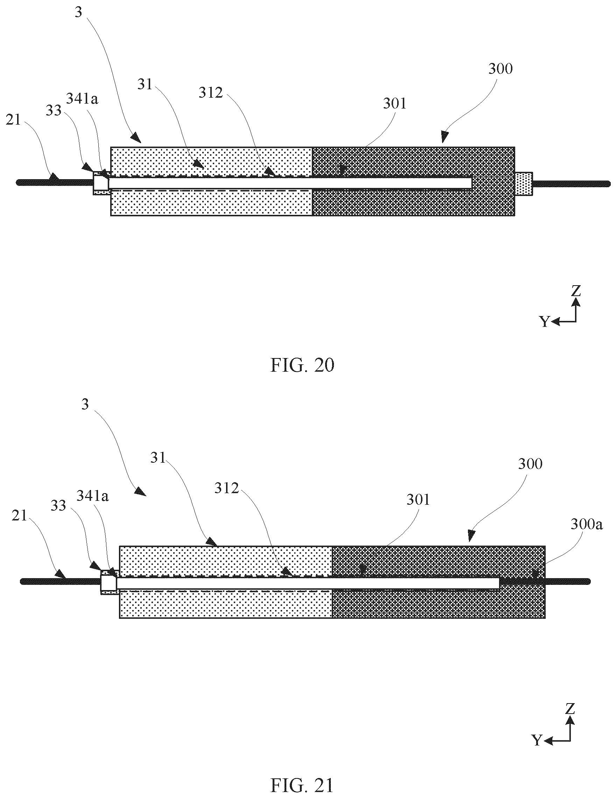

The fastening structure 33 is described above with reference to a specific embodiment. The optical connector 3 (referred to as a first optical connector below) in this embodiment of this application further needs to be connected to another optical connector (referred to as a second optical connector 300 below) during application. To ensure that the two optical connectors are accurately aligned, in some embodiments, the optical connector 3 in this embodiment of this application further includes a positioning structure 34 shown in FIG. 19. The positioning structure 34 may be disposed on the ferrule 31, or may be disposed on the optical waveguide device 32. This is not limited in this application. As shown in FIG. 20, when the first optical connector 3 is connected to the second optical connector 300, the positioning structure 34 may position a mounting position of the second optical connector 300 on the first optical connector 3.

For example, the second optical connector 300 may use a structure similar to that of the first optical connector 3. An optical waveguide device is also mounted in a ferrule of the second optical connector 300 shown in FIG. 20. Alternatively, as shown in FIG. 21, an optical fiber 300a is mounted in the ferrule of the second optical connector 300. Therefore, the positioning structure 34 can ensure that the second optical port 30b of the waveguide path 322 in the first optical connector 3 can be aligned with and connected to the optical fiber 300a or the first optical port of the waveguide path in the second optical connector 300. Therefore, processing precision of the ferrule 31 of the first optical connector 3 can be reduced, and alignment precision or alignment difficulty between the optical waveguide device 32 in the first optical connector 3 and the optical transmission medium in the second optical connector 300 can be improved.

It should be noted that a transmission mode of the optical fiber 300a in the second optical connector 300 includes but is not limited to an optical transmission mode such as single-mode, multi-mode, or few-mode. In addition, the optical fiber 300a may be a multi-core optical fiber, or may be a hollow optical fiber. This is not limited in this application.

In addition, the positioning structure 34 may be made into a plurality of structures, to meet connection requirements of the second optical connector 300 of different structures.

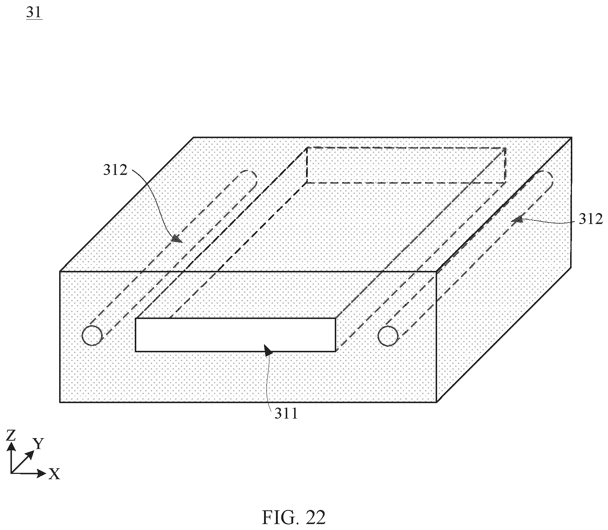

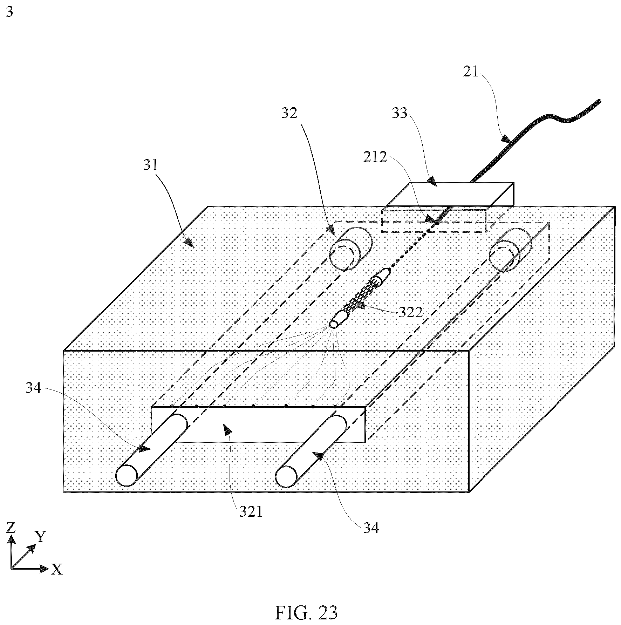

For example, the positioning structure 34 in the first optical connector 3 is a positioning pin 341a shown in FIG. 19. The ferrule 31 is provided with a mounting hole 312 shown in FIG. 22. For example, an extension direction of the mounting hole 312 may be the same as a connection direction of the first optical connector 3 and the second optical connector 300. For example, the extension direction of the mounting hole 312 is a Y-axis direction shown in FIG. 22. The positioning pin 341a may be movably mounted in the mounting hole 312 of the ferrule 31. It should be noted that the mounting hole 312 may be further provided on the optical waveguide device 32. Therefore, as shown in FIG. 23, the positioning pin 341a may be movably mounted on the optical waveguide device 32. This is not limited in this application. Correspondingly, the second optical connector 300 may be provided with a positioning hole 301 that cooperates with the positioning pin 341a, and an extension direction of the positioning hole 301 may be the same as the extension direction of the mounting hole 312. When the first optical connector 3 is connected to the second optical connector 300, as shown in FIG. 21, the positioning pin 341a on the first optical connector 3 may be inserted into the positioning hole 301 of the second optical connector 300. Therefore, positioning of the first optical connector 3 and the second optical connector 300 is implemented, and it is ensured that the second optical port 30b of the waveguide path 322 of the optical waveguide device 32 in the first optical connector 3 can be aligned with and connected to the optical fiber 300a or the first optical port of the waveguide path of the optical waveguide device in the second optical connector 300.

In addition, a quantity of mounting holes 312 on the ferrule 31 of the first optical connector 3 is not limited in this application. In some embodiments, as shown in FIG. 22, two mounting holes 312 are provided on the ferrule 31 of the first optical connector 3. The two mounting holes 312 are respectively located on two sides of the optical waveguide device 32. The first optical connector 3 includes two positioning pins 341a, and the two positioning pins 341a are movably mounted in the two mounting holes 312 respectively. Correspondingly, two positioning holes 301 are provided at positions corresponding to the two positioning pins 341a on the second optical connector 300. When the first optical connector 3 is inserted into the second optical connector 300, the two positioning pins 341a on the first optical connector 3 may be respectively mounted in the two positioning holes 301 of the second optical connector 300.

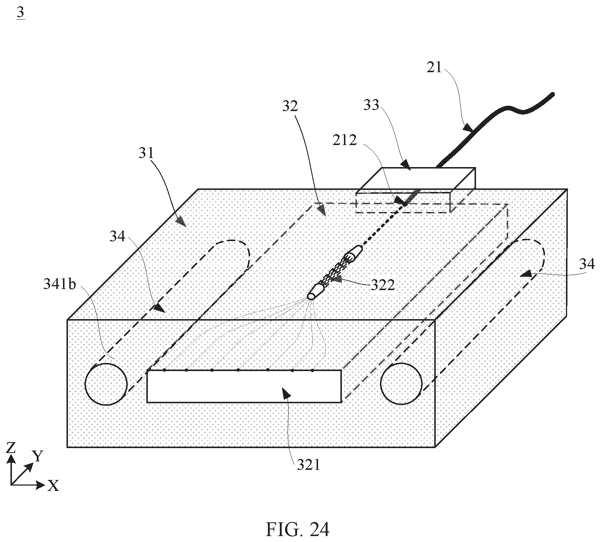

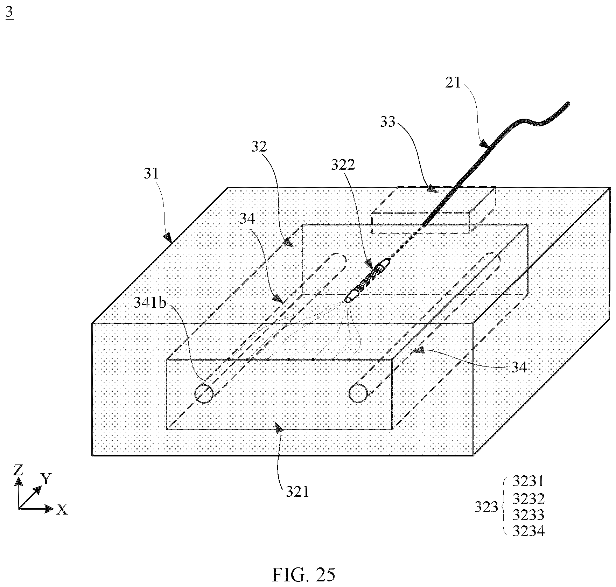

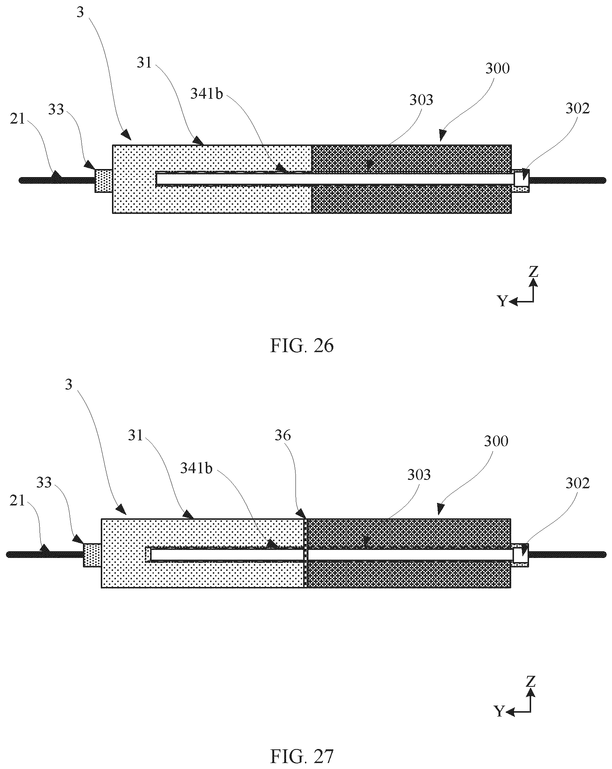

It may be understood that the positioning pin 341a on the first optical connector 3 may be interchanged with the positioning hole 301 on the second optical connector 300. That is, as shown in FIG. 24, the positioning structure 34 of the first optical connector 3 is a positioning hole 341b. The positioning hole 341b may be provided on the ferrule 31 as shown in FIG. 24, or may be provided on the optical waveguide device 32 as shown in FIG. 25. An extension direction of the positioning hole 341b may be the same as a connection direction of the first optical connector 3 and the second optical connector 300. A mounting hole 303 is disposed at a position corresponding to the positioning hole 341b on the first optical connector 3 on the second optical connector 300, and an extension direction of the mounting hole 303 may be the same as the extension direction of the positioning hole 341b. The positioning pin 302 shown in FIG. 26 may be movably mounted in the mounting hole 303. The positioning pin 302 on the second optical connector 300 may be connected to the positioning hole 341b on the first optical connector 3. For example, there are two positioning holes 341b on the first optical connector 3 shown in FIG. 24, and the two positioning holes 341b are respectively located on two sides of the optical waveguide device 32. Correspondingly, there are also two positioning pins 302 on the second optical connector 300, and the two positioning pins 302 on the second optical connector 300 may be correspondingly connected to the two positioning holes 341b on the first optical connector 3.

When the first optical connector 3 is connected to the second optical connector 300, not only the positioning structure 34 needs to be connected to the second optical connector 300 for positioning, but also the ferrule 31 of the first optical connector 3 needs to match the ferrule of the second optical connector 300. The second optical connector 300 may have an LC, SC, or MT connector head. The ferrule 31 of the first optical connector 3 needs to be manufactured into a shape that matches the connector head of the second optical connector 300. Therefore, the ferrule 31 may be a circle or a cuboid shown in FIG. 25. In addition, another fastening structure further needs to be disposed between the first optical connector 3 and the second optical connector 300 for fastening. For example, a fastening structure between the first optical connector 3 and the second optical connector 300 is a clamp or an adapter.

In addition, the first optical connector 3 and the second optical connector 300 may also be directly positioned and fastened by using a clamping structure. For example, the positioning structure 34 on the first optical connector 3 is a slot, and a fastener matching the slot is disposed on the second optical connector 300. The slot is clamped to the fastener, so that not only the first optical connector 3 and the second optical connector 300 can be positioned, but also the first optical connector 3 and the second optical connector 300 can be fastened.

In addition, in some embodiments of this application, the optical waveguide device 32 further includes an optical protective film 36 shown in FIG. 27. The optical protective film 36 is disposed on a surface on which the second end face B of the optical waveguide on the optical waveguide device 32 is located. When the first optical connector 3 is connected to the second optical connector 300, the optical protective film 36 may not only form mechanical protection for the optical waveguide device 32, but also form optical protection. For example, the optical protective film 36 may include any one or more of a heat-resistant film, a heat-conducting film, a heat-insulation film, and an anti-reflection film. Therefore, the optical protective film 36 may further have functions such as heat resistant, a heat conduction, heat insulation, and an anti-reflection film.

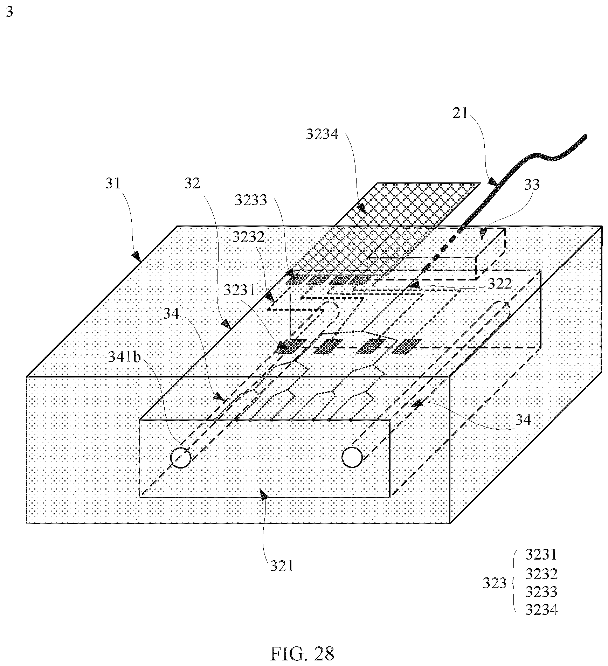

It should be noted that, for an embodiment in which the optical waveguide device 32 in the optical connector 3 is any one of a tunable optical attenuator, an optical switch, or an electrically tunable optical splitter, the optical waveguide device 32 further includes an electronic control component 323 shown in FIG. 28, and the electronic control component 323 is disposed on the substrate 321. The electronic control component 323 may heat or apply a voltage to the waveguide path 322. In this way, other functions such as power supply and electronic control (for example, optical power adjustment and optical path connection/disconnection) of the waveguide path 322 are implemented. In addition, there may be further a device with a sensing function on the substrate 321 in the optical waveguide device 32, to further implement more complex functional waveguide integration. Details are not described herein.

For example, as shown in FIG. 28, the electronic control component 323 includes an electrode 3231, a conductive line 3232, and a connection pad 3233 that are all disposed on the substrate 321 of the optical waveguide device 32. The electrode 3231, the conductive line 3232, and the connection pad 3233 are connected sequentially. The electrode 3231 may be disposed above or on two sides of the waveguide path 322. Therefore, the electrode 3231 can heat or apply a voltage to the waveguide path 322 in the optical waveguide device 32.

In addition, the electronic control component 323 may further include a flexible printed circuit board 3234 (flexible printed circuit, FPC). One end of the flexible printed circuit board 3234 may be connected to the connection pad 3233 by welding, bonding, or conductive adhesive bonding, and the other end of the flexible printed circuit board 3234 may be electrically connected to an external circuit apparatus, to supply power to the electrode 3231 by using the external circuit apparatus. The flexible printed circuit board 3234 is a flexible structure, and the flexible printed circuit board 3234 is connected to the connection pad 3233 and the external circuit apparatus conveniently.

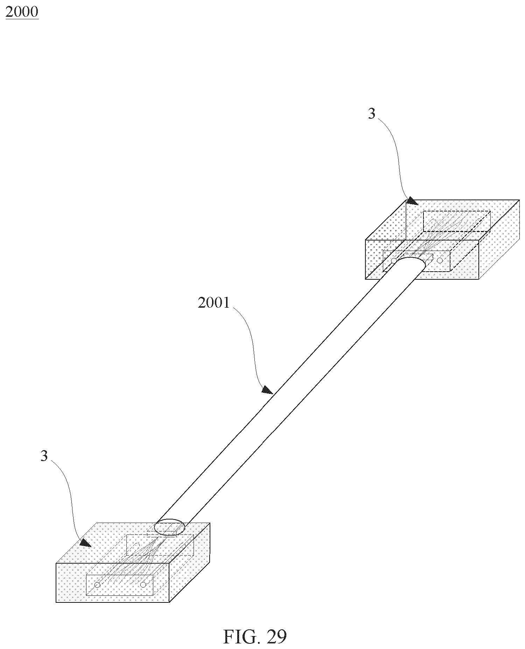

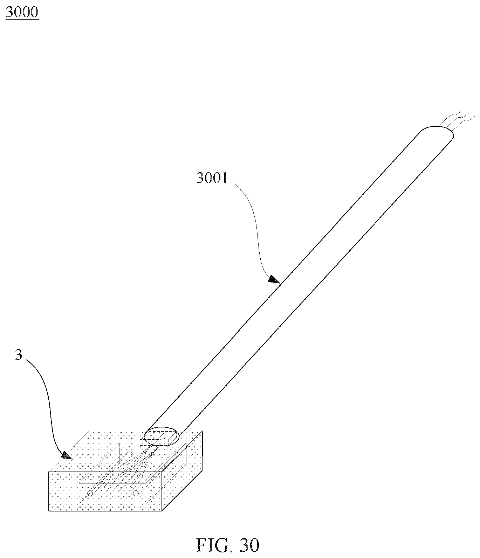

A structure of the first optical connector 3 may be applied not only to the optical module 30, but also to the foregoing optical fiber patch cord, or may be applied to a fiber pigtail. For example, as shown in FIG. 29, both ends of an optical fiber 2001 in an optical fiber patch cord 2000 are connected to a first optical connector 3. Altematively, in some embodiments of this application, one end of the optical fiber 2001 in the optical fiber patch cord 2000 is connected to the first optical connector 3, and the other end of the optical fiber 2001 in the optical fiber patch cord 2000 is connected to an optical connector of another structure. For another example, as shown in FIG. 30, one end of an optical fiber 3001 in a fiber pigtail 3000 is connected to a first optical connector 3.

Therefore, the first optical connector 3 in this embodiment of this application may implement a connection between frames in an optical communication system, a connection within a frame in the optical communication system, a connection between chips in optical communication devices, and a connection between chips in an optical communication device. In addition, in addition to the foregoing optical network scenario, the first optical connector 3 may be further applied to scenarios such as an optical application, an in-vehicle scenario, satellite optical communication, and optical fiber sensing.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical connector, comprising:
an optical waveguide device, wherein the optical waveguide device has a first optical port, and is able to implement splitting, combining, demultiplexing, multiplexing, multi core-single core conversion, filtering, reflection, spot size conversion, optical path connection/disconnection, optical path direction conversion, or optical power adjustment; and
a fastening structure, wherein the fastening structure is disposed on the optical waveguide device or is connected to the optical waveguide device, the fastening structure is configured to fasten an optical transmission medium, and the first optical port of the optical waveguide device is aligned with and connected to the optical transmission medium in the fastening structure.

2. The optical connector according to claim 1, wherein the fastening structure comprises two clamping plates that are disposed opposite to each other, the two clamping plates are configured to: fasten and clamp the optical transmission medium and expose an end face of the optical transmission medium, and the two clamping plates are fastened to the optical waveguide device, so that the optical transmission medium in the clamping plates is aligned with and connected to the first optical port of the optical waveguide device.

3. The optical connector according to claim 2, wherein a contact surface of either or both of the clamping plates is provided with a first positioning groove, and the first positioning groove is configured to position the optical transmission medium.

4. The optical connector according to claim 1, wherein the fastening structure is a fastening block, and a plurality of fastening holes for mounting the optical transmission medium are provided in the fastening block.

5. The optical connector according to claim 1, wherein the fastening structure is a second positioning groove provided on the optical waveguide device, and the second positioning groove is aligned with the first optical port of the optical waveguide device, and is configured to position the optical transmission medium.

6. The optical connector according to any one of claims 1 to 5, wherein the optical waveguide device further has a second optical port, and the optical connector further comprises:
a ferrule, wherein the ferrule is provided with a mounting groove, the optical waveguide device is mounted in the mounting groove, and the second optical port of the optical waveguide device is exposed outside the ferrule.

7. The optical connector according to claim 6, wherein the optical connector further comprises:
a positioning structure, wherein the positioning structure is disposed on the ferrule or the optical waveguide device, and is configured to connect to another optical connector for positioning.

8. The optical connector according to claim 7, wherein the positioning structure is a positioning pin that is movably mounted on the ferrule or the optical waveguide device, or a positioning hole provided on the ferrule or the optical waveguide device.

9. The optical connector according to any one of claims 1 to 8, wherein the optical waveguide device further has the second optical port, and the optical waveguide device further comprises:
an optical protective film, wherein the optical protective film is disposed on a surface on which the second optical port of the optical waveguide device is located.

10. The optical connector according to any one of claims 1 to 9, wherein the optical waveguide device is a single-layer structure or a multi-layer structure.

11. The optical connector according to any one of claims 1 to 10, wherein a light incidence direction of the optical waveguide device is the same as a light emission direction of the optical waveguide device; or a light incidence direction of the optical waveguide device is perpendicular to a light emission direction of the optical waveguide device.

12. The optical connector according to any one of claims 1 to 11, wherein a material of the optical waveguide device is any one of glass, silicon dioxide, lithium niobate, a group III-V semiconductor compound, silicon-on-insulator, silicon oxynitride, and a high polymer.

13. An optical pigtail, comprising:
an optical transmission medium; and
the optical connector according to any one of claims 1 to 12, wherein one end of the optical transmission medium is fastened by the fastening structure in the optical connector, and the optical transmission medium in the fastening structure is aligned with and connected to the first optical port of the optical waveguide device.

14. An optical patch cord, comprising:
an optical transmission medium; and
a first optical connector and a second optical connector, wherein the first optical connector and the second optical connector are respectively connected to two ends of the optical transmission medium, the first optical connector and/or the second optical connector are/is the optical connector according to any one of claims 1 to 12, and the optical transmission medium is fastened, aligned with, and connected to the first optical port of the optical waveguide device by using the fastening structure.

15. An optical communication device, comprising an optical chip and the optical connector according to any one of claims 1 to 12, wherein the optical chip is connected to the optical connector.

16. An optical communication system, comprising at least two optical communication devices and the optical connector according to any one of claims 1 to 12, wherein the two optical communication devices are connected through the optical connector.
